# FASCICULE DE BREVET EUROPEEN

(11) **EP 3 738 909 B1**
(45) Date de publication et mention de la délivrance du brevet: **15.01.2025**
(21) Numéro de dépôt: 20174059.4
(22) Date de dépôt: 12.05.2020
(51) Int. Cl.: B65G 45/10, B08B 3/12, B65G 45/22, B65G 45/24

(54) **DISPOSITF DE NETTOYAGE D'UNE BANDE TRANPORTEUSE PAR IMMERSION DANS UN BAIN DE LIQUIDE SOUMIS A DES ONDES ULTRASONORES**
REINIGUNGSVORRICHTUNG EINES TRANSPORTBANDES DURCH EINTAUCHEN IN EIN FLÜSSIGKEITSBAD, DAS ULTRASCHALLWELLEN AUSGESETZT WIRD
DEVICE FOR CLEANING A CONVEYOR BELT BY IMMERSION IN A BATH OF LIQUID SUBJECTED TO ULTRASONIC WAVES

(30) Priorité: 17.05.2019 FR 1905181; 17.05.2019 FR 1905183
(43) Date de publication de la demande: 18.11.2020
(73) Titulaire: IGT DEVELOPMENT, 2360 Saint Leonard (FR)
(72) Inventeur: BOSSAERT, Frédérick, 83200 Toulon (FR); TIERCE, Pascal, 59242 Genech (FR); RIDEZ, Jean-Marie, 62930 Wimereux (FR)
(74) Mandataire: Matkowska, Franck

(56) Documents cités:
- DE-U1- 8 914 973
- FR-A- 1 303 595
- GB-A- 2 154 973
- JP-A- 2005 335 896
- US-A- 3 066 686
- US-A- 5 310 047
- US-A1- 2014 311 862

## Description

### Domaine technique

La présente invention concerne le nettoyage d'une bande transporteuse d'un convoyeur par immersion d'une portion de la bande transporteuse dans un bain de liquide soumis à des ondes ultrasonores. Elle trouve plus particulièrement, mais pas exclusivement, son application au nettoyage d'une bande transporteuse destinée à être utilisée pour transporter des produits alimentaires transformés ou non transformés, notamment des produits agroalimentaires ou au nettoyage d'une bande transporteuse destinée à être utilisée pour transporter des produits dans le domaine pharmaceutique ou cosmétique.

### Art antérieur

La demande de brevet américain US 2014/311862 divulgue un dispositif de nettoyage selon le préambule de la revendication 1.

On a déjà proposé dans la demande de brevet américain US 2014/0311862 une solution technique de nettoyage d'une bande transporteuse de convoyeur, par immersion d'une portion de la bande transporteuse dans un bain de liquide soumis à des ondes ultrasonores.

Dans la demande de brevet américain US 2014/0311862, la bande transporteuse est utilisée pour transporter des produits agricoles, tels que par exemple des oeufs, et le nettoyage a pour but de désinfecter la bande transporteuse en détruisant les microorganismes qui peuvent se développer en cours d'utilisation à la surface de la bande transporteuse. Dans le procédé divulgué dans cette demande de brevet américain US 2014/0311862, on guide et on dévie mécaniquement le parcours de la bande transporteuse, au moyen notamment d'un bras qui est équipé d'un rouleau de guidage, qui est fixé sur le convoyeur et qui est mobile verticalement par rapport au convoyeur, de manière à immerger entièrement une portion de la bande transporteuse dans un bain contenant un liquide de nettoyage soumis à des ondes ultrasonores, et de préférence un bain d'eau contenant des produits désinfectants.

De manière connue en soi, les ondes ultrasonores permettent de créer par cavitation des bulles d'air dans le bain liquide, qui favorisent le nettoyage de la portion de bande immergée.

La solution technique décrite dans cette publication est intéressante car elle présente l'avantage de pouvoir être utilisée pour nettoyer une bande transporteuse en mouvement, par exemple en cours d'utilisation. Cette solution technique présente toutefois les inconvénients suivants.

La mise en œuvre du bras de déviation mobile verticalement entre une position basse, dans laquelle il permet de plonger la bande transporteuse dans le bain de nettoyage, et une position haute, dans laquelle il permet de sortir complètement la bande transporteuse du bain de nettoyage, présente l'inconvénient de devoir modifier de manière importante la tension de la bande transporteuse, de manière à modifier sa longueur de parcours localement dans sa portion de trajet où elle est déviée par le bras. En effet, lorsque le bras est en position basse, la bande transporteuse doit être très fortement détendue de manière à augmenter localement de manière importante la longueur de parcours de la bande transporteuse, et à l'inverse lorsque le bras est en position haute, la bande transporteuse doit être très fortement retendue de manière à raccourcir localement la longueur de parcours de la bande transporteuse. Il est donc nécessaire de prévoir en plus de ce bras, un système additionnel permettant un réglage de la tension de la bande transporteuse dans une plage de réglage importante, et la mise en œuvre de ce bras impose, de manière désavantageuse, une modification importante de la tension de la bande transporteuse à chaque changement de bain de nettoyage. En outre, lorsque le bras est en position haute, il présente de manière préjudiciable un encombrement vertical important.

En outre dans la solution décrite dans cette demande de brevet américain US 2014/0311862, un volume de liquide est présent au-dessus de la portion de bande transporteuse immergée dans le bain de liquide. Il en résulte qu'il n'y a pas de rupture d'impédance acoustique importante sur le parcours des ondes ultrasonores dans le bain de liquide au niveau de la portion de bande transporteuse immergée, ce qui rend le phénomène de nettoyage par cavitation plus aléatoire et potentiellement moins efficace.

On a également proposé dans la demande de brevet internationale WO 2018/050587, une autre solution technique de nettoyage d'une bande transporteuse de convoyeur, par immersion d'une portion de la bande transporteuse dans un bain de liquide soumis notamment à des ondes ultrasonores, qui permet de pallier les inconvénients susvisés de la solution décrite dans cette demande de brevet américain US 2014/0311862. Dans cette autre solution technique, on met en œuvre un dispositif de guidage, qui est fixé sur le bâti du convoyeur, et qui permet de dévier une portion de la bande de transporteuse sur une faible hauteur en combinaison avec un chariot mobile supportant une cuve de nettoyage. Ce chariot mobile est équipé de moyens mécaniques permettant de caler en position avec précision la cuve de nettoyage par rapport à ladite portion de bande transporteuse, de telle sorte que ladite portion de bande transporteuse est avantageusement positionnée à l'interface liquide/air caractérisée par une rupture d'impédance acoustique importante, en étant immergée dans le bain de liquide avec sa face supérieure positionnée en dehors du bain de liquide ou affleurant la surface du bain de liquide.

Cette solution technique décrite dans la demande de brevet WO2018/050587 présente toutefois l'inconvénient d'obliger à un positionnement très précis de la portion de bande transporteuse par rapport à la surface du bain de liquide et doit en outre de manière contraignante être mise en œuvre sur une portion de bande transporteuse horizontale.

### Objectif de l'invention

La présente invention a pour objectif de proposer une nouvelle solution technique de nettoyage d'une bande transporteuse de convoyeur, par immersion d'une portion de la bande transporteuse dans un bain de liquide soumis à des ondes ultrasonores, laquelle nouvelle solution technique pallie les inconvénient des solutions susvisées de l'art antérieur.

En particulier, cette nouvelle solution technique présente l'avantage de pouvoir être mise en œuvre facilement et rapidement sur une bande transporteuse d'un convoyeur, sans devoir modifier de manière importante la tension de la bande transporteuse, et de préférence sans devoir rallonger de la bande transporteuse, tout en permettant un nettoyage efficace par immersion complète d'une portion de la bande transporteuse dans le bain de liquide soumis aux ondes ultrasonores, sans nécessiter une orientation horizontale de ladite portion de la bande transporteuse et/ou sans nécessiter un positionnement de ladite portion de la bande transporteuse par rapport à la surface du bain de liquide qui soit aussi précis que dans la solution décrite dans la demande de brevet internationale WO2018/050587.

### Résumé de l'invention

Dans le présent texte et dans les revendications, les termes « face de guidage courbe cylindrique » désignent toute surface cylindrique pouvant être obtenue par déplacement d'une droite génératrice le long d'une courbe directrice entre deux génératrices extrêmes (amont et aval) parallèles. La face de guidage courbe cylindrique est au moins en partie convexe pour permettre ledit guidage de la bande transporteuse, mais n'est pas nécessairement convexe sur toute sa surface. En outre, la courbe directrice de la face de guidage courbe cylindrique n'est pas nécessairement en forme d'arc de cercle.

Dans le présent texte et dans les revendications, les termes « nettoyage » ou « nettoyer » doivent être interprétés avec leur acceptation la plus large, et quelle que soit la taille ou la nature des contaminants qui se sont développés et/ou accrochés à la bande transporteuse. Ainsi, dans le cadre de l'invention l'action de « nettoyer » ou le « nettoyage » de la bande transporteuse couvre toute action de retirer de la bande transporteuse tout ou partie des contaminants (impuretés, salissures, matières organiques, microorganismes, bactéries,...) qui se sont développés et/ou accrochés à la bande transporteuse. Dans le cadre de l'invention les ondes ultrasonores générées dans un bain de liquide permettent de générer par cavitation des bulles dans le bain de liquide, lesquelles bulles en explosant participent à au nettoyage de la bande transporteuse. Dans le cadre de l'invention, l'action de « nettoyer » ou le « nettoyage » couvre également toute action de décontamination, désinfection ou stérilisation de la bande de transporteuse permettant de détruire et/ou d'inhiber tout ou partie des contaminants qui se sont développés et/ou accrochés à la bande transporteuse, notamment les contaminants organiques ou biologiques de type par exemple microorganismes, bactéries, ..., sans que ces contaminants ne soient nécessairement retirés de la bande transporteuse.

Dans le présent texte et dans les revendications, les termes « bande transporteuse » couvre tout type de bande transporteuse connue, pouvant former une surface de transport mobile, et quelles que soient notamment la structure, la construction, et les dimensions de la bande transporteuse. De manière non limitative et non exhaustive de l'invention, la bande transporteuse peut être une bande de matériau (par exemple bande textile, bande caoutchouc, ...) plus ou moins lisse et plus ou moins épaisse, ou peut être constituée par des éléments assemblés de type chaines ou chainons articulés.

L'invention a pour objet un dispositif de nettoyage d'une bande transporteuse d'un convoyeur, ledit dispositif de nettoyage comportant une cuve de nettoyage, des moyens ultrasonores permettant de générer des ondes ultrasonores dans un bain de liquide contenu dans la cuve de nettoyage, et au moins un guide comportant une paroi de guidage et des moyens de fixation ; la paroi de guidage comporte une face de guidage courbe cylindrique ; lesdits moyens de fixation permettent de fixer le guide sur le convoyeur dans une position de nettoyage dans laquelle la face de guidage de la paroi de guidage guide et dévie une portion de la bande transporteuse ; la cuve de nettoyage est apte à être positionnée par rapport au guide fixé en position de nettoyage, de telle sorte que la face de guidage du guide est orientée vers la cuve de de nettoyage et est positionnée au moins en partie à l'intérieur de la cuve de nettoyage et qu'une partie du guide est positionnée en dehors de la cuve de nettoyage; ledit guide comporte au moins deux parois latérales qui délimitent, de manière étanche avec la paroi de guidage un volume ouvert qui contient de l'air, de telle sorte que lorsque ledit guide est en partie immergé en position de nettoyage dans un bain de liquide contenu dans la cuve de nettoyage, le liquide contenu dans la cuve de nettoyage ne pénètre pas dans ledit volume.

Plus particulièrement, le système de nettoyage de l'invention peut comporter les caractéristiques additionnelles et facultatives ci-après, prises isolément ou en combinaison les unes avec les autres :
- la face de guidage courbe cylindrique de la paroi de guidage s'étend entre deux génératrices extrêmes amont et aval séparées par une distance de guidage maximale (D_{Max}) ; le guide est caractérisé par une distance maximale d'immersion (H_{Max}), qui est mesurée, perpendiculairement au plan contenant les deux génératrices extrêmes amont et aval de la face de guidage, entre ce plan et le sommet de la face de guidage le plus éloigné de ce plan, et ladite distance de guidage maximale (Dₘₐₓ) est supérieure à trois fois ladite distance maximale d'immersion (H_{Max}).
- ladite distance de guidage maximale (Dₘₐₓ) est supérieure à quatre fois ladite distance maximale d'immersion (H_{Max}), et de préférence est supérieure à six fois ladite distance maximale d'immersion (H_{Max}).
- la distance maximale d'immersion (H_{Max}) est supérieure ou égale à 20mm.
- la distance maximale d'immersion (H_{Max}) est inférieure ou égale à 110mm.
- la distance de guidage maximale (Dₘₐₓ) est supérieure ou égale à 250mm.
- la distance de guidage maximale (Dₘₐₓ) est inférieure ou égale à 550mm.
- la dimension de la face de guidage de la paroi de guidage du guide mesurée dans la direction de sa génératrice est au moins égale à la largeur de la bande transporteuse.
- la face de guidage forme une surface courbe convexe.
- la directrice de la face de guidage cylindrique est un arc de cercle.
- la cuve de nettoyage est montée sur un chariot mobile.
- le guide est fixe par rapport au convoyeur.

L'invention a également pour objet un convoyeur comportant un bâti sur lequel est montée une bande transporteuse, et un dispositif de nettoyage susvisé ou un guide susvisé.

Plus particulièrement le guide du dispositif de nettoyage est fixé ou est apte à être fixé sur le convoyeur dans une position de nettoyage dans laquelle la bande transporteuse du convoyeur est guidée uniquement par toute la portion de la face de guidage qui s'étend entre ladite génératrice extrême amont et ladite génératrice extrême aval.

L'invention a également pour objet une utilisation du dispositif de nettoyage susvisé pour nettoyer une bande transporteuse d'un convoyeur.

L'invention a enfin pour objet un procédé de nettoyage d'une bande transporteuse d'un convoyeur au moyen dispositif de nettoyage susvisé. Au cours de ce procédé au le guide est fixé en position de nettoyage sur le convoyeur et la cuve de nettoyage contenant un bain de liquide est positionnée par rapport au guide, de telle sorte d'une part qu'une portion de la bande transporteuse est guidée et déviée par la face de guidage de la paroi de guidage du guide, en étant immergée entièrement dans le bain de liquide contenu dans la cuve de nettoyage et de telle sorte d'autre part qu'il n' y a pas de liquide au-dessus de la paroi de guidage du guide, et au cours de ce procédé on génère des ondes ultrasonores dans le bain de liquide (contenu dans la cuve de nettoyage et on fait défiler la bande transporteuse.

### Brève description des dessins

D'autres caractéristiques et avantages de l'invention apparaîtront plus clairement à la lecture de la description détaillée ci-après de plusieurs variantes de réalisation, laquelle description est donnée à titre d'exemple non limitatif et non exhaustif, et en référence aux dessins annexés sur lesquels :
- la figure 1 est une vue en coupe d'une variante de réalisation d'un convoyeur et d'un dispositif de nettoyage,
- la figure 2 est une vue en perspective isométrique du guide du dispositif de nettoyage de la figure 1, qui n'est pas selon l'invention,
- la figure 3 est une coupe du guide de la figure 2
- la figure 4 est une représentation schématique, en vue de côté, montrant le guide de la figure 1 en position de nettoyage et guidant une portion de bande transporteuse immergée entièrement dans un bain de liquide contenu dans la cuve de nettoyage,
- la figure 5 est une vue en perspective isométrique d'un guide d'un dispositif de l'invention,
- la figure 6 est une vue en perspective isométrique d'une troisième variante de guide, qui n'est pas selon l'invention.

### Description détaillée

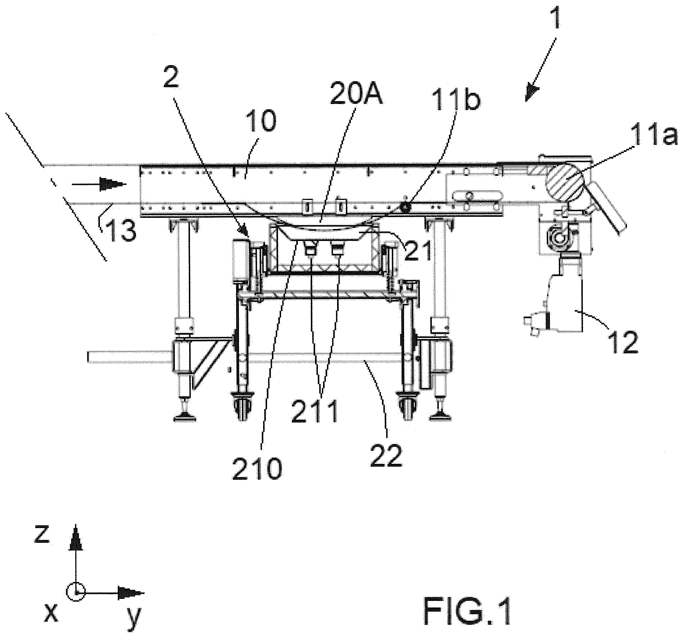

Dans la variante particulière de réalisation de la figure 1, le convoyeur 1 comporte, de manière connue en soi, un bâti 10 sur lequel sont montés des rouleaux de guidage et d'entraînement 11a, 11b d'une bande transporteuse sans fin, dont un rouleau motorisé 11a entraîné en rotation par un motoréducteur 12. Le dispositif de nettoyage 2 comporte un guide 20A, qui est fixé au bâti 10 du convoyeur 1 et une cuve de nettoyage 21, par exemple en acier inoxydable.

Dans la variante particulière illustrée sur la figure 1, la cuve de nettoyage 21 est montée sur un chariot mobile 22 permettant le positionnement ou le retrait de la cuve de nettoyage 21 par rapport au guide 20A. Un exemple de chariot mobile 22 pouvant convenir a par exemple déjà été décrit dans la demande de brevet WO2018/050587.

Le fond 210 de la cuve de noyage 21 est équipé, de manière connu en soi, de transducteurs ultrasonores 211, qui sont couplés à un générateur ultrasonore, par exemple de type piézoélectrique, et qui permettent en fonctionnement de générer des ondes ultrasonores dans un bain de liquide contenu dans la cuve de nettoyage 21.

### Guide 20A

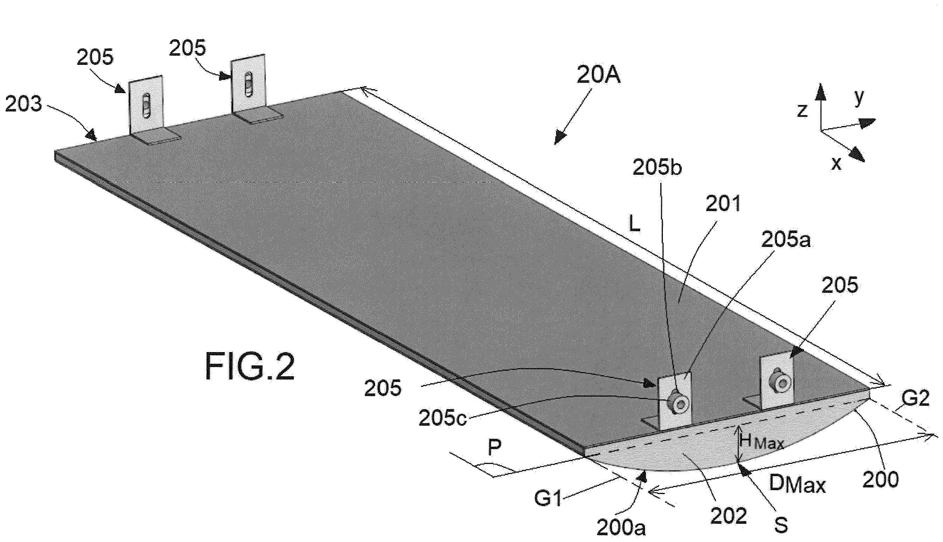

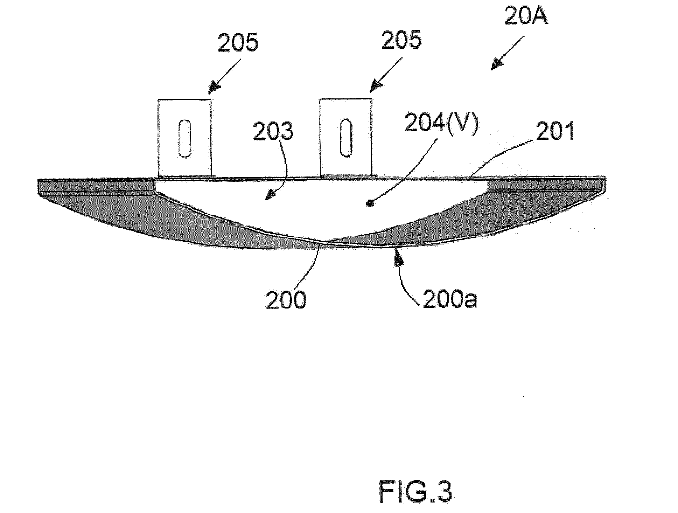

En référence aux figures 2 et 3, le guide 20A comporte une paroi de guidage inférieure 200 imperméable.

Cette paroi de guidage 200 est par exemple une tôle courbe de faible épaisseur, par exemple acier inoxydable.

La face externe 200a de cette paroi de guidage 200 forme une face de guidage courbe cylindrique qui s'étend le long de sa directrice entre deux droites génératrices extrêmes amont G1 et aval G2 séparées par une distance de guidage maximale D_{Max}.

La face de guidage 200a s'étend en outre dans la direction (X) de sa génératrice sur une longueur L, qui est de préférence au moins égale à la largeur de la bande transporteuse du convoyeur 1 mesurée perpendiculairement à la direction d'avancement Y de la bande transporteuse.

Le guide 20A est en outre caractérisé par une distance maximale d'immersion H_{Max} (figure 2), qui est mesurée, perpendiculairement au plan P contenant les deux génératrices extrêmes amont G1 et aval G2 de la face de guidage 200a, entre ce plan P et le sommet S de la face de guidage 200a le plus éloigné de ce plan P.

Ladite distance de guidage maximale D_{Max} est supérieure à trois fois ladite distance maximale d'immersion Hₘₐₓ (D_{Max}/H_{Max}> 3), de préférence supérieure à quatre fois ladite distance maximale d'immersion H_{Max} (D_{Max}/H_{Max} > 4), et plus préférentiellement encore à six fois ladite distance maximale d'immersion H_{Max} (D_{Max}/ H_{Max} > 6).

De préférence, ladite distance maximale d'immersion H_{Max} est comprise entre 20mm et 110mm. De préférence, ladite distance de guidage maximale D_{Max} est comprise entre 250mm et 550mm.

A titre d'exemple donné à titre purement indicatif, dans une variante particulière de réalisation D_{Max} valait 350mm et H_{Max} valait 54mm.

Dans la variante particulière des figures 1 et 2, la face de guidage 200a forme un arc de cercle en section transversale (courbe directrice de la face de guidage).

Dans la variante particulière des figures 2 et 3,
le guide 20A comporte en outre une paroi supérieure 201 imperméable, sous la forme d'une tôle plane et de faible épaisseur, par exemple en acier inoxydable, soudée de manière étanche à la paroi de guidage inférieure 200, et deux parois latérales 202, 203 imperméables, sous la forme de tôles planes de faible épaisseur, par exemple en acier inoxydable, soudées de manière étanche aux deux extrémités de la paroi de guidage inférieure 200 et de la paroi supérieure 201.

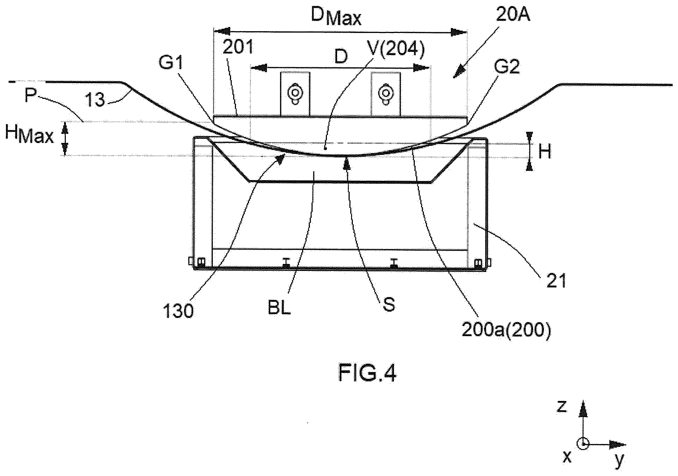

La paroi de guidage inférieure 200, la paroi supérieure 201 et les deux parois latérales 202, 203 délimitent à l'intérieur du guide 20A une cavité interne 204 (figures 3 et 4) qui est étanche et permet de ménager au-dessus de la paroi de guidage 200 un volume V contenant un gaz, et de préférence de l'air. Dans une autre variante, cette cavité 204 pourrait être mise sous vide.

Tel que cela apparaîtra plus clairement ultérieurement, le volume V délimité par cette cavité étanche 204 a pour fonction de créer une rupture d'impédance acoustique à l'interface avec la portion de la bande transporteuse guidée et immergée entièrement au moyen du guide 20A dans un bain de liquide contenu dans la cuve de nettoyage 21.

Le guide 20A comporte en outre des moyens de fixation 205 permettant de fixer le guide sur le bâti 10 du convoyeur 1 dans une position de nettoyage, telle que celle illustrée sur la figure 1.

Dans cet exemple particulier des figures 1 à 3, ces moyens de fixation 205 comportent des équerres de fixation 205a en forme de L, dont une aile est fixée, par exemple par soudage, à la face externe de la paroi supérieure 201 du guide. L'autre aile de chaque équerre de fixation 200a comporte une ouverture traversante oblongue 205b permettant la fixation du guide 20A sur bâti 10 du convoyeur 1, au moyen par exemple de boulons 205c, et avec un léger jeu de réglage en hauteur du guide 20A.

### Guide 20A en position de nettoyage - Fonctionnement

En référence aux figures 1 et 4, lorsque le guide 20A est fixé sur le convoyeur 1 en position de nettoyage, la face de guidage 200a de la paroi de guidage 200 est en contact avec une portion 130 du brin inférieur de la bande transporteuse 13 du convoyeur 1, avec la génératrice de la face de guidage 200a cylindrique orientée perpendiculairement à la direction d'avancement Y de la bande transporteuse 13, de manière à guider ladite portion de bande transporteuse en la déviant sur une hauteur inférieure ou égale à ladite distance maximale d'immersion H_{Max}.

La bande transporteuse 13 est constituée de manière usuelle par une courroie sans fin formant une boucle et enroulée et tendue sur les rouleaux de guidage et d'entrainement 11a, 11b du convoyeur 1. La structure et le ou les matériaux constitutifs de cette bande transporteuse 13, ainsi que les dimensions, notamment la longueur, la largeur, et l'épaisseur de cette bande transporteuse 13, sont sans importance pour l'invention.

La bande transporteuse 13 peut par exemple, être constituée par une bande de matériau imperméable ou perméable (par exemple bande textile, bande caoutchouc, ...) plus ou moins lisse et plus ou moins épaisse, ou peut être constituée par des éléments assemblés de type chaines ou chainons articulés.

Le positionnement de la bande transporteuses 13 par rapport au guide 20A fixé au convoyeur 1 peut avantageusement être obtenu, de manière connue soi, en diminuant, suffisamment la tension de la bande transporteuse 13 sans rallonger la bande transporteuse.

En référence aux figures 1 et 4, la cuve de nettoyage 21 est positionnée par rapport au guide 20A fixé en position de nettoyage, de telle sorte que la face de guidage 200a du guide est orientée vers la cuve de nettoyage 21 et est positionnée au moins en partie à l'intérieur de la cuve de nettoyage 21 et qu'une partie du guide ( notamment la paroi supérieure 201 dans cet exemple particulier) est positionnée en dehors de la cuve de nettoyage 21.

En fonctionnement, la cuve de nettoyage 21 contient un bain de liquide BL.

Ce bain d'un liquide BL peut par exemple être de l'eau ou de l'eau contenant des agents désinfectants et/ou des agents détergents dilués.

Le brin inférieur de la bande transporteuse 13 défile dans la direction d'avancement Y. La portion 130 de la bande transporteuse 13 est guidée et déviée dans le bain de liquide BL par la face de guidage 200a du guide 20A, de telle sorte que cette portion 130 de la bande transporteuse 13 est entièrement immergée dans le bain de liquide sur une profondeur d'immersion H inférieure ou égale à ladite distance maximale d'immersion H_{Max}.

L'étanchéité du guide 20A empêche le bain de liquide BL contenu dans la cuve de nettoyage 21 de passer dans le volume V au-dessus de la paroi de guidage 200.

Lorsqu'ils sont alimentés par de l'énergie électrique à haute fréquence délivrée par un générateur d'ultrasons, les transducteurs ultrasonores 211 permettent, de manière connue en soi, une mise en vibration de la cuve 21, et de ce fait du bain de liquide BL contenu dans la cuve, à des fréquences ultrasonores.

Les ondes ultrasonores (typiquement dans une gamme de fréquences comprise entre 12kHz et 1MHz) déclenchent successivement des phases de compression et de décompression complexes, aboutissant à ce qu'on appelle couramment un phénomène de cavitation. La décompression provoque la formation d'une multitude de bulles microscopiques qui viennent ensuite imploser violemment au cours de la phase de compression. Cette action provoque des turbulences provoquant le décollement des contaminants (impuretés, salissures, matières organiques ou biologiques, microorganismes, bactéries, ...) accrochés à la portion 130 de la bande transporteuse 13 immergée dans le bain de liquide BL. Plus la fréquence ultrasonore est élevée et plus le nettoyage sera fin (bulles de cavitation plus petites et plus nombreuses). Parallèlement, la pulsation des micro-courants générés simultanément dans de bain de liquide BL assure l'éloignement continu des impuretés par rapport à la portion 130 de la bande transporteuse 13 immergée dans le bain de liquide BL.

Lorsque les ondes ultrasonores générées dans le bain de liquide BL traversent la portion 130 de la bande transporteuse 13 immergée dans le liquide BL et la paroi de guidage 200, elles sont réfléchies efficacement dans le bain de liquide BL, à proximité immédiate de la portion 130 de la bande transporteuse 13, grâce au changement d'indice acoustique important entre le liquide et le milieu (gaz, notamment air, ou vide) dans le volume V du guide.

Sans être tenu par cette interprétation, il en résulte une meilleure efficacité du phénomène de cavitation à proximité immédiate de la portion 130 de la bande transporteuse 13 immergée dans le liquide BL, et de ce fait un nettoyage plus efficace de la bande transporteuse.

Le bain de liquide BL dans la cuve de nettoyage peut contenir des agents détergents facilitant la mise en solution et la dispersion des contaminants et/ou des agents désinfectants permettant de détruire et/ou d'inhiber les contaminants organiques ou biologiques, et notamment les microorganismes, bactéries,...

Le nettoyage de la bande transporteuse par passage dans ce bain de liquide BL dans la cuve 21 permet avantageusement un nettoyage efficace de la bande transporteuse. En particulier, ce bain de liquide permet d'avoir une action de nettoyage, non seulement sur les contaminants présents sur la face de transport de la bande transporteuse, mais également sur les contaminants qui peuvent s'être accrochés et/ou développés dans des parties de la bande transporteuse difficilement accessibles, en particulier lorsque cette bande transporteuse est constituée d'éléments mécaniques articulés de type chaînons.

De manière avantageuse, plus le rapport D_{Max}/H_{Max} est important, plus la surface de la portion 130 de la bande transporteuse 13 immergée dans le bain de liquide BL et exposée aux ondes ultrasonores, est avantageusement importante par rapport à la profondeur d'immersion H de la bande transporteuse par le guide 20A. En outre plus la profondeur d'immersion H de la bande transporteuse est faible, et plus la diminution de tension de la bande transporteuse 13 peut être avantageusement faible pour mettre en place la bande transporteuse par rapport au guide 20A sans devoir rallonger la bande transporteuse.

Plus particulièrement , le guide est ainsi conçu d'une manière générale de telle sorte que le rapport D_{Max}/H_{Max} est supérieur 3, et de préférence supérieur à 4, et plus préférentiellement encore supérieur à 6.

Il n'est pas nécessaire de positionner avec précision en profondeur la portion 130 de la bande transporteuse 13, à partir du moment où cette portion 130 est totalement immergée dans le bain de liquide BL. En outre l'inclinaison de cette portion 130 de la bande transporteuse n'est pas critique pour la mise en oeuvre du nettoyage et peut être quelconque. Ainsi sur la figure 4, de manière non limitative de l'invention, le plan P contenant les deux génératrices extrême amont G1 et aval G2 est horizontal.

Ce plan P peut être incliné par rapport à la verticale.

Le guide 20A peut être facilement et rapidement adapté sur un convoyeur existant. Ce guide 20A peut également être intégré à un convoyeur, au stade de la conception et de la fabrication de ce convoyeur.

Une fois le nettoyage de la bande transporteuse 13 terminé, on peut selon le cas, laisser en place la cuve de nettoyage 21, ou on contraire la retirer, par exemple pour changer le liquide dans la cuve 21 et éventuellement pour nettoyer la cuve 21.

Le retrait de la cuve de nettoyage 21 peut être effectué très simplement et très rapidement, sans qu'il soit nécessaire d'arrêter la bande transporteuse 13, notamment sans intervention sur le convoyeur 1, et en particulier sans modification de la tension de la bande transporteuse 13.

### Applications

L'invention peut être utilisée pour nettoyer tout type de bande transporteuse, utilisée pour transporter tout type de produits ou matières.

Une application préférentielle, mais non exclusive de l'invention, est le nettoyage d'une bande transporteuse, utilisée d'une manière générale dans le domaine alimentaire, pour transporter tout type de produits alimentaires transformés ou non transformés ou de matières alimentaires transformées ou non transformées, à destination de l'alimentation humaine ou animal, et en particulier d'une bande transporteuse, utilisée dans le domaine de l'industrie agroalimentaire, ou dans le domaine de l'aquaculture, de la pèche ou de élevage.

### Autres variantes possibles

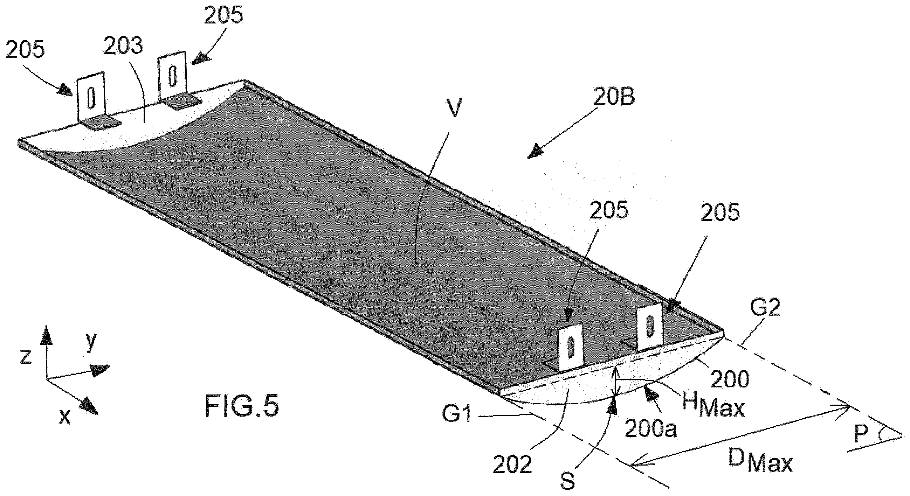

Dans une autre variante conforme à l'invention, le guide étanche 20B (figure 5) peut ne pas comporter de paroi supérieure 201 et comporter uniquement la paroi de guidage inférieure 200 et les parois latérales 202 et 203 qui empêchent le passage du liquide dans le volume V ouvert contenant de l'air au-dessus de la paroi de guidage 200, lorsque le guide est en partie immergé dans le bain de liquide.

Dans la variante de guide 20B de la figure 5, les moyens de fixation 205 du guide sont fixés aux parois latérales 202 et 203.

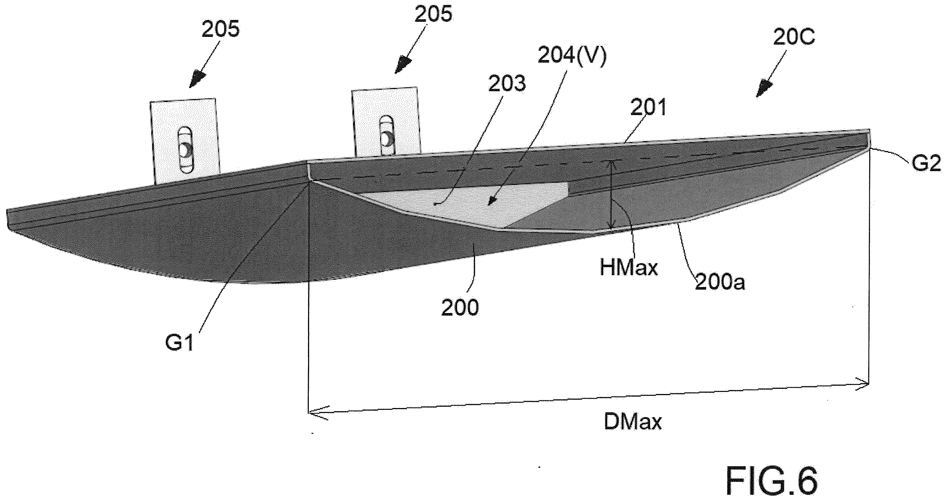

Dans le cadre de l'invention, la face de guidage 200a du guide forme une surface cylindrique convexe, mais non nécessairement en forme d'arc de cercle, tel que par exemple la face de guidage 200a du guide 20Cde la figure 6.

Dans une autre variante, la cuve de nettoyage 21 pourrait être solidaire du convoyeur 1, de préférence en étant mobile par rapport au bâti du convoyeur, par exemple en étant montée coulissante sur des rails fixés au bâti du convoyeur, afin de pouvoir la positionner par rapport au guide.

## Revendications

1. Dispositif de nettoyage (2) d'une bande transporteuse (13) d'un convoyeur (1), ledit dispositif de nettoyage comportant une cuve de nettoyage (21), des moyens ultrasonores (211) permettant de générer des ondes ultrasonores dans un bain de liquide contenu dans la cuve de nettoyage, et au moins un guide (20B ) comportant une paroi de guidage (200) et des moyens de fixation (205), la paroi de guidage comportant une face de guidage (200a) courbe cylindrique, lesdits moyens de fixation (205) permettant de fixer le guide sur le convoyeur dans une position de nettoyage dans laquelle la face de guidage (200a) de la paroi de guidage (200) guide et dévie une portion (130) de la bande transporteuse (13), la cuve de nettoyage (21) étant apte à être positionnée par rapport au guide (20B) fixé en position de nettoyage, de telle sorte que la face de guidage (200a) du guide est orientée vers la cuve de de nettoyage (21) et est positionnée au moins en partie à l'intérieur de la cuve de nettoyage (21) et qu'une partie du guide (20B) est positionnée en dehors de la cuve de nettoyage (21),
**caractérisé en ce que**
ledit guide (20B) comporte au moins deux parois latérales (202 ; 203) qui délimitent, de manière étanche avec la paroi de guidage (200), un volume (V) ouvert qui contient de l'air, de telle sorte que lorsque ledit guide est en partie immergé en position de nettoyage dans un bain de liquide contenu dans la cuve de nettoyage, le liquide contenu dans la cuve de nettoyage ne pénètre pas dans ledit volume (V).

2. Dispositif de nettoyage selon la revendication 1, dans lequel la dimension (L) de la face de guidage (200a) de la paroi de guidage (200) du guide mesurée dans la direction (X) de sa génératrice est au moins égale à la largeur de la bande transporteuse.

3. Dispositif de nettoyage selon l'une quelconque des revendications précédentes, dans lequel la face de guidage (200a) forme une surface courbe convexe, et de préférence dans lequel la directrice de la face de guidage (200a) cylindrique est un arc de cercle.

4. Dispositif de nettoyage selon l'une quelconque des revendications précédentes, dans lequel la cuve de nettoyage (21) est montée sur un chariot mobile (22).

5. Dispositif de nettoyage selon l'une quelconque des revendications précédentes, dans lequel le guide (20B) est fixe par rapport au convoyeur (1).

6. Convoyeur (1) comportant un bâti (10) sur lequel est montée une bande transporteuse (13), et dispositif de nettoyage visé à l'une quelconque des revendications 1 à 5.

7. Utilisation du dispositif de nettoyage visé à l'une quelconque des revendications 1 à 5 pour nettoyer une bande transporteuse d'un convoyeur.

8. Procédé de nettoyage d'une bande transporteuse (13) d'un convoyeur (1) au moyen d'un dispositif de nettoyage visé à l'une quelconque des revendications 1 à 5, au cours duquel le guide (20B ) est fixé en position de nettoyage sur le convoyeur et la cuve de nettoyage (21) contenant un bain de liquide (BL) est positionnée par rapport au guide (20A ; 20B ; 20C), de telle sorte d'une part qu'une portion (130) de la bande transporteuse (13) est guidée et déviée par la face de guidage (200a) de la paroi de guidage (200) du guide (20B ), en étant immergée entièrement dans le bain de liquide (BL) contenu dans la cuve de nettoyage (21) et de telle sorte d'autre part qu'il n'y a pas de liquide au-dessus de la paroi de guidage (200) du guide, et au cours duquel on génère des ondes ultrasonores dans le bain de liquide (BL) contenu dans la cuve de nettoyage et on fait défiler la bande transporteuse (13).

## Patentansprüche

1. Reinigungsvorrichtung (2) für ein Förderband (13) eines Förderers (1), wobei die Reinigungsvorrichtung einen Reinigungsbehälter (21), Ultraschallmittel (211) zum Erzeugen von Ultraschallwellen in einem Flüssigkeitsbad, das in dem Reinigungsbehälter enthalten ist, und mindestens eine Führung (20B), die eine Führungswand (200) und Befestigungsmittel (205) aufweist, wobei die Führungswand eine zylindrisch gekrümmte Führungsfläche (200a) aufweist, wobei die Befestigungsmittel (205) das Befestigen der Führung an dem Förderer an einer Reinigungsposition, in der die Führungsfläche (200a) der Führungswand (200) einen Abschnitt (130) des Förderbandes (13) führt und umlenkt, ermöglichen, wobei der Reinigungsbehälter (21) dazu geeignet ist, in Bezug auf die in der Reinigungsposition befestigte Führung (20B) derart positioniert zu werden, dass die Führungsfläche (200a) der Führung dem Reinigungsbehälter (21) zugewandt ist und zumindest teilweise innerhalb des Reinigungsbehälters (21) positioniert ist, und dass ein Teil der Führung (20B) außerhalb des Reinigungsbehälters (21) positioniert ist,
**dadurch gekennzeichnet, dass**
die Führung (20B) mindestens zwei Seitenwände (202; 203) aufweist, die zusammen mit der Führungswand (200) ein offenes, Luft enthaltendes Volumen (V) undurchlässig abgrenzen, so dass, wenn die Führung in der Reinigungsposition teilweise in ein Bad einer Flüssigkeit eingetaucht ist, die in dem Reinigungsbehälter enthalten ist, die in dem Reinigungsbehälter enthaltene Flüssigkeit nicht in das Volumen (V) eindringt.

2. Reinigungsvorrichtung nach Anspruch 1, bei der die Abmessung (L) der Führungsfläche (200a) der Führungswand (200) der Führung, gemessen in der Richtung (X) ihrer Kante bzw. Mantellinie, mindestens gleich der Breite des Förderbandes ist.

3. Reinigungsvorrichtung nach einem der vorhergehenden Ansprüche, wobei die Führungsfläche (200a) eine konvexe gekrümmte Oberfläche bildet, und bevorzugt die Leitkurve der zylindrischen Führungsfläche (200a) ein Kreisbogen ist.

4. Reinigungsvorrichtung nach einem der vorhergehenden Ansprüche, wobei der Reinigungsbehälter (21) auf einem beweglichen Wagen (22) montiert ist.

5. Reinigungsvorrichtung nach einem der vorhergehenden Ansprüche, wobei die Führung (20B) in Bezug auf den Förderer (1) fest ist.

6. Förderer (1), umfassend ein Gestell (10), auf dem ein Förderband (13) montiert ist, und eine Reinigungsvorrichtung nach einem der Ansprüche 1 bis 5.

7. Verwendung der Reinigungsvorrichtung nach einem der Ansprüche 1 bis 5 zum Reinigen eines Förderbands eines Förderers.

8. Verfahren zum Reinigen eines Förderbandes (13) eines Förderers (1) mittels einer Reinigungsvorrichtung nach einem der Ansprüche 1 bis 5, wobei die Führung (20B) in der Reinigungsposition an dem Förderer befestigt ist/wird und der ein Flüssigkeitsbad (BL) enthaltende Reinigungsbehälter (21) derart an dem Förderer in Bezug auf die Führung (20A; 20B; 20C) positioniert ist/wird, dass einerseits ein Abschnitt (130) des Förderbandes (13) durch die Führungsfläche (200a) der Führungswand (200) der Führung (20B) geführt und umgelenkt wird, wobei es vollständig in das Flüssigkeitsbad (BL), das in dem Reinigungsbehälter (21) enthalten ist, eingetaucht wird, und dass andererseits sich keine Flüssigkeit über der Führungswand (200) der Führung befindet, und wobei Ultraschallwellen in dem in dem Reinigungsbehälter enthaltenen Flüssigkeitsbad (BL) erzeugt werden, und das Förderband (13) vorbeigeführt wird.

## Claims

1. Cleaning device (2) for a conveyor belt (13) of a conveyor (1), said cleaning device comprising a cleaning tank (21), ultrasonic means (211) for generating ultrasonic waves in a liquid bath contained in the cleaning tank, and at least one guide (20B) comprising a guide wall (200) and attachment means (205), the guide wall having a cylindrical curved guide face (200a), said attachment means (205) enabling the guide to be attached to the conveyor in a cleaning position in which the guide face (200a) of the guide wall (200) guides and deflects a portion (130) of the conveyor belt (13), the cleaning tank (21) being capable of being positioned relative to the guide (20B) attached in the cleaning position such that the guide face (200a) of the guide faces the cleaning tank (21) and is positioned at least partially inside the cleaning tank (21) and that part of the guide (20B) is positioned outside the cleaning tank (21), **characterized in that** said guide (20B) comprises at least two side walls (202; 203) which delimit, sealingly with the guide wall (200), an open volume (V) which contains air such that when said guide is partially immersed in the cleaning position in a liquid bath contained in the cleaning tank, the liquid contained in the cleaning tank does not penetrate into said volume (V).

2. Cleaning device according to claim 1, wherein the dimension (L) of the guide face (200a) of the guide wall (200) of the guide measured in the direction (X) of its generatrix is at least equal to the width of the conveyor belt.

3. Cleaning device according to any of the preceding claims, wherein the guide face (200a) forms a convex curved surface, and preferably wherein the directrix of the cylindrical guide face (200a) is a circular arc.

4. Cleaning device according to any of the preceding claims, wherein the cleaning tank (21) is mounted on a movable carriage (22).

5. Cleaning device according to any of the preceding claims, wherein the guide (20B) is attached relative to the conveyor (1).

6. Conveyor (1) comprising a frame (10) on which a conveyor belt (13) is mounted, and a cleaning device according to any of claims 1 to 5.

7. Use of the cleaning device according to any of claims 1 to 5 for cleaning a conveyor belt of a conveyor.

8. Method for cleaning a conveyor belt (13) of a conveyor (1) by means of a cleaning device according to any of claims 1 to 5, during which the guide (20B) is attached in the cleaning position on the conveyor and the cleaning tank (21) containing a liquid bath (BL) is positioned relative to the guide (20A; 20B; 20C) such that, on the one hand, a portion (130) of the conveyor belt (13) is guided and deflected by the guide face (200a) of the guide wall (200) of the guide (20B) by being fully immersed in the liquid bath (BL) contained in the cleaning tank (21), and such that, on the other hand, there is no liquid above the guide wall (200) of the guide, and during which ultrasonic waves are generated in the liquid bath (BL) contained in the cleaning tank and the conveyor belt (13) is made to run.
